# EUROPEAN PATENT APPLICATION

(11) **EP 1 302 998 A1**
(43) Date of publication of application: **16.04.2003**
(21) Application number: 01203956.6
(22) Date of filing: 16.10.2001
(51) Int. Cl.: H01M 16/00, B60L 11/18

(54) **Combined system comprising electric batteries and solid oxide fuel cell apparatus**

(71) Applicant: Mes-Dea S.A., 6855 Stabio (CH)
(72) Inventor: Dustmann, Cord-Henrich, 6839 Sagno (CH); Ivers-Tiffée, Ellen, 76139 Karlsruhe (DE)
(74) Representative: Fiammenghi-Domenighetti, Delfina

(57) **Abstract**

Electric power generating equipment (1) is described, suitable in particular for the propulsion of a vehicle in which it is installed, obtained by combining a fuel-cell system (2) supplied by reformer(s) with one or more batteries or battery cells (4i), in which the fuel-cell system (2) is of the solid oxide type (SOFC) and the batteries or battery cells (4i) are of the sodium-nickel chloride or sodium-iron chloride type, and the said fuel-cell system (2) and the said batteries or battery cells 4i are housed in a single container (5) with heat-insulating walls (5p), and are arranged and connected in such a way that the heat produced by the reformers can be transmitted to the batteries or battery cells (4i) and, conversely, the heat produced or stored by the batteries or battery cells(4i) can be transmitted to the reformers or to the complete fuel-cell system (2).

## Description

The present invention relates to the field of electric power generating equipment, and more particularly the sector thereof relating to equipment that can also be used for the propulsion of a vehicle in which it is installed.

Even more specifically, the invention relates to equipment obtained by combining a fuel-cell system with reformers, with an assembly consisting of one or more batteries or battery cells.

As is known by a person skilled in the art, the fuel-cell system with reformers that offers most advantages is the solid oxide system (SOFC), which permits the use of a great variety of fuels, such as gasoline, diesel oils, vegetable oils, kerosene, alcohols, gases or even hydrogen, though not necessarily having to use the latter.

The drawback of such a system, which has until now precluded its application for vehicle propulsion, is the high temperature that are required for its operation, ranging from about 500 to 900°C. Before it becomes operational for the purposes of propulsion, the system in question has to be preheated by means of the reformer or another burner for a period of time (15-30 minutes) that is too long for the purposes of operation and use of a vehicle. In fact, whenever the vehicle is stopped long enough for the system to cool down, the preheating described above has to be carried out before it can be restarted.

The inventor of the present device, who works in the field of high-technology batteries, considered that it would be possible to supplement the fuel-cell system with a series of conventional batteries which supplies the necessary power to the vehicle during the said preheating period, but the duration of the said period would remain constant, and the overall efficiency of the complete equipment would be unsatisfactory. The inventor considered, however, that by using batteries or battery cells, of the sodium-nickel chloride or sodium-iron chloride type, whose only drawback is that they can be maintained constantly at a relatively moderate temperature (in some cases approximately 300°C), and by installing a series of these batteries or battery cells and an SOFC system in a single heat-insulating container, the whole can be maintained at a relatively moderate temperature even during vehicle stops, which greatly reduces the duration of the said period of preheating.

Furthermore, with such a device, by operating just the reformers at the minimum necessary load, and by directing the heat generated by them to the batteries or battery cells, it is possible to maintain the latter, during stoppages of the vehicle, at their operating temperature so that they are ready to supply the power required for starting and motion of the said vehicle instantaneously.

By suitably combining the operation of the batteries and of the SOFC system and controlling it electronically with a single control unit, excellent results can moreover be obtained for the overall efficiency of the whole equipment, as will be better illustrated below.

The inventor therefore devised the object of the present invention, comprising electric power generating equipment that is particularly suitable for the propulsion of a vehicle as described in Claim 1.

There now follows a more detailed description of a preferred example of application, chosen from the numerous examples available to a person skilled in the art, applying the teachings contained in the aforesaid Claim 1.

In the course of this description, reference will also be made to the appended drawings, in which:
- Figure 1 shows a schematic plan view of the said example of application of the equipment of the invention;
- Figure 2 shows a functional block diagram of the equipment of Fig. 1, integrated in a motor vehicle propulsion system.

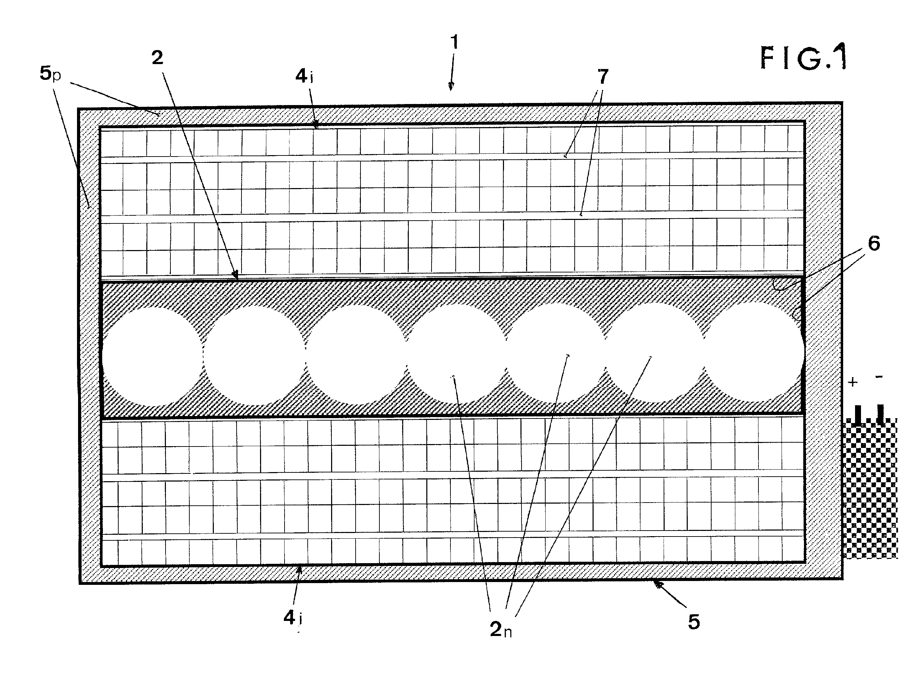

Considering Figure 1 first, this shows equipment 1 according to the invention, consisting essentially of an SOFC system 2 comprising several elements 2n side by side, placed between two batteries, or series of battery cells 4i of the sodium-nickel chloride or sodium-iron chloride type. Both the SOFC system 2 and the battery cells 4i are housed in the same container 5 with heat-insulating walls 5p. In this way the heat stored by the battery cells 4i during stoppage of the vehicle on which the equipment is installed, is transmitted to the SOFC system, maintaining it, as already mentioned, at a temperature close to the operating temperature of the battery cells 4i, and achieving the advantages already described in reduction of the length of the period of preheating of the SOFC system 2.
Conversely, the heat generated by the reformers, as mentioned, can reach the battery cells 4i, maintaining them at a desired temperature.

It should be noted that the SOFC system 2 and the battery cells 4i are separated from one another by partitions 6 made of heat-insulating material, which have the function of limiting the transmission of heat from the SOFC system to the battery cells 4i when the SOFC system reaches its working temperatures (500-900°C), which are considerably higher than the operating temperature of the sodium-nickel chloride or sodium-iron chloride batteries or battery cells 4i, which as mentioned is at most approximately 300°÷400°C.

For the same reason the inventor has envisaged providing each of the battery cells 4i, or even the individual elements comprising them, with a cooling system that is capable of eliminating the excess heat transmitted from the SOFC system 2.

A possible realization of such a cooling system consists of embedding heat-conducting metal plates 7 between the battery cells 4i; these plates have a projecting part which is in contact with a circulating liquid or gas, such as air or oil.

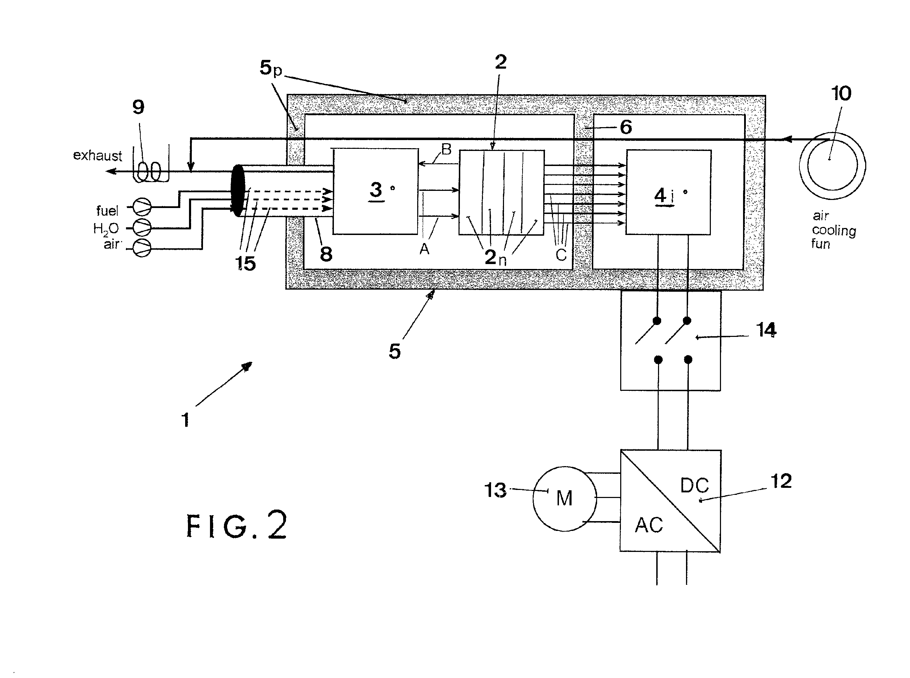

Because, as is well known, an SOFC system is provided with one or more discharge pipes for the spent gases, the inventor also envisages the possibility of circulating the fuel and/or the air and/or the water in tubes arranged inside the said discharge pipe(s) before sending them to the reformers 3, as can be seen in Fig. 2.

The management of equipment constructed according to the invention and of the power generated by the two parts of which it is comprised (i.e. the SOFC system and the sodium-nickel chloride or sodium-iron chloride battery cells) can be defined by a person skilled in the art in a manner that the said person considers to be the most suitable for each application.

With the aim of optimizing the overall efficiency of the equipment, the inventor suggests, moreover, that its two aforesaid main component parts should be constructed in such a way that both of them, mounted in parallel, could supply a desired percentage of power to the electric motors used for propulsion. In equipment with a total peak power of 50 kW, for example, the inventor envisages managing it in such a way that the SOFC system produces 15 kW, and the batteries or battery cells 4i produce the remaining 35 kW.

It is obvious that, in equipment 1 according to the invention, the said connection in parallel can be effected between one or more elements of the SOFC system and one or more battery cells 4i, or a predetermined number of elementary units making up the latter.

The SOFC system, as well as supplying a proportion of power to the motors for propulsion, can also advantageously effect momentary recharging of the batteries or battery cells 4i, and the power required for this recharging can be varied by altering the amount of fuel treated in the reformers and sent to the fuel cells for conversion of their chemical energy to electrical energy.

To optimize the efficiency of the recharging process, the inventor envisages constructing the equipment 1 in such a way that the recharging voltage of batteries or battery cells 4i is equal to the voltage generated by the part of the SOFC system connected to them in parallel when it is operating at around 10-20% of maximum load, i.e., as is well known by persons skilled in the art, when the SOFC system is operating in conditions of highest efficiency.
This can be achieved mainly by suitable design of the SOFC system and of the sodium-nickel chloride or sodium-iron chloride batteries or battery cells, to give them the desired values of internal resistance.

The inventor also envisages constructing the equipment 1 in such a way that the discharge voltage of the batteries or battery cells is equal to the voltage generated by the part of the SOFC system connected to them in conditions of maximum load.

It should be pointed out that when the fuel-cell system 2 is housed in the said container 5 with heat-insulating walls in its entirety, i.e. together with the associated reformers, it is possible to use the portion of fuel not consumed in the fuel cells for supplying the reformers, heating them at the same time in order to make up for the inevitable heat losses to which they are liable, and increase the overall efficiency of the equipment 1.

It is obvious that, in equipment according to the invention, the heat generated by the fuel is also partly recovered to maintain the battery cells 4i at their minimum operating temperature.

An accessory that the inventor envisages adding to the equipment is a charging system for the batteries or battery cells with a rectifier for taking the necessary current from an ordinary mains supply. It is also possible to add a system of resistors, which can always be connected to the said mains supply, for heating the batteries or battery cells 4i and/or for maintaining them at their minimum operating temperature.

A possible block diagram of equipment 1 according to the invention is depicted in Figure 2:
air, water and fuel are fed into reformer(s) 3 after passing in countercurrent through the supply tubes 15 housed in a discharge pipe 8 for the spent gases from the said reformers 3. The latter subject the fuel to cracking and send it (arrow A) to the fuel cells 2n, from which the aforementioned proportion of unconsumed fuel mixed to the exhaust gas is reintroduced (arrow B) into the reformers to recover their energy, as mentioned.

The electrical energy generated by the fuel cells is then sent, as already explained, to the battery cells 4i connected to them in parallel (arrow C), and the direct current at the output of battery cells 4i is sent to an inverter 12, which converts it to alternating current suitable for supplying the electric motor(s) 13 used for propulsion of the vehicle (not shown). The said direct current at the output of battery cells 4i reaches the said inverter 12 via a suitable switching device 14, which connects them together only when necessary for operating the vehicle.

It should be noted that, in the example illustrated, the aforementioned spent gases leave the said pipe 8 and reach a heat exchanger 9, in which they give up some of their thermal energy for heating the air of the passenger compartment of the vehicle, which is circulated in exchanger 9 by suitable fans 10 of known type.

As is also shown in the diagram in Figure 2, all the component parts of equipment 1, i.e. reformers, fuel cells and battery cells 4i, are housed in a single heat-insulating container 5, and a further partition 6 made of heat-insulating material is interposed between the battery cells 4i and the fuel-cell system SOFC 2, for reasons that have already been explained in full.

In conclusion, the equipment of the invention fulfils the purpose that the inventor intended, i.e. of making it possible to use a fuel-cell system of the SOFC type not only for stationary applications, but also for vehicle propulsion. It should also be pointed out that the overall dimensions and weight of the equipment in question are entirely compatible with the space available in a vehicle: for example, equipment with a maximum peak power equal to 50 kW is substantially in the form of a parallelepiped approximately 94 cm long, approximately 60 cm wide and approximately 30 cm high, and weighing around 300 kg.

## Claims

1. Equipment (1) for generating electric power, suitable in particular for the propulsion of a vehicle in which it is installed, obtained by combining a fuel-cell system (2) supplied by one or more reformer(s) (3) and one or more batteries or battery cells (4i), **characterized in that** the fuel-cell system (2) is of the solid oxide type (SOFC) and the batteries or battery cells (4i) are of the sodium-nickel chloride or sodium-iron chloride type, and the said fuel-cell system (2) and the said batteries or battery cells 4i are housed in a same container (5) with heat-insulating walls (5p), and are arranged and connected in such a way that the heat produced by the reformers (3) can be transmitted to the batteries or battery cells (4i) and that, conversely, the heat produced or stored by the battery cells can be transmitted to the reformers or to the complete fuel-cell system (2).

2. Equipment according to Claim 1, in which, inside the said container (5), the fuel-cell system (2) is separated from the said one or more batteries or battery cells (4i) by partitions (6) of heat-insulating material.

3. Equipment according to one of the preceding claims, in which the said fuel-cell system (2) consists of one or more units (2n), each of which is connected in parallel to one of the said one or more batteries or battery cells (4i) or to one or more elements of which it is comprised, and at least a proportion of the electrical energy generated by the fuel-cell system (2) is used for recharging the said one or more batteries (4i).

4. Equipment according to Claim 3, in which the recharging voltage of the said one or more batteries or battery cells (4i) or of one or more elements of which they are comprised, is equal to the voltage generated by the one or more units of the said fuel-cell system (2) connected to them in parallel when they are operating at approximately 10-20% of their maximum load.

5. Equipment according to one of the Claims 3 or 4, in which the voltage generated by one or more units of the said fuel-cell system (2) when they are operating at maximum load is substantially equal to the discharge voltage of the said one or more batteries or battery cells(4i) or of one or more elements of which they are comprised, connected to them in parallel.

6. Equipment according to one of the preceding claims, in which each of the said one or more batteries or battery cells(4i) is provided with cooling means capable of maintaining its temperature below its maximum operating temperature.

7. Equipment according to Claim 6, in which the said cooling means for the said one or more batteries or battery cells(4i) comprise heat-conducting metal plates (7) or pipes with a part embedded in the said batteries or battery cells and a part that projects from them, which is in contact with a circulating liquid or gaseous cooling fluid.

8. Equipment according to Claim 7, in which the said cooling fluid consists of circulating oil.

9. Equipment according to one of the preceding claims, provided with a discharge pipe (8) for the spent gases, **characterized in that** the fuel and/or the air and/or the water necessary for the functioning of the fuel-cell system are circulated, prior to being fed into the reformer(s), in feed pipes (15) housed within the said discharge pipe (8).

10. Equipment according to one of the preceding claims, in which the proportion of fuel not consumed in the fuel cells, which leaves them, is used for supplying and at the same time heating the reformer or reformers.
